# EUROPEAN PATENT APPLICATION

(11) **EP 3 742 121 A1**
(43) Date of publication of application: **25.11.2020**
(21) Application number: 19741158.0
(22) Date of filing: 16.01.2019
(51) Int. Cl.: G01C 21/28, G08G 1/01, G08G 1/137

(54) **INFORMATION COLLABORATION SYSTEM**

(30) Priority: 18.01.2018 JP 2018006109
(71) Applicant: Micware Co., Ltd., Kobe-shi, Hyogo 650-0044 (JP)
(72) Inventor: FUJII, Takeshi, Kobe-shi, Hyogo 650-0044 (JP); ITO Makoto, Kobe-shi, Hyogo 650-0044 (JP)
(74) Representative: Vossius & Partner Patentanwälte Rechtsanwälte mbB
(86) International application number: PCT/JP2019/001082
(87) International publication number: WO 2019/142820

(57) **Abstract**

An on-board device (1) includes a sensor device (11) that detects at least one sensor detection value. Sensor information includes the at least one sensor detection value and a detection time. A mobile terminal (2) receives the sensor information and positioning information from the on-board device (1). The mobile terminal (2) includes an information synchronizer (252) that synchronizes positioning information with the sensor information when a time difference between a time at which the positioning information is obtained and the detection time is equal to or less than a predetermined value. The positioning information includes a position obtained by a positioning information obtaining unit (12, 21) and the time at which the position is obtained. A movable-object position estimation unit (253) estimates a position of a movable object based on the positioning information and the sensor information synchronized with each other by the information synchronizer (252).

## Description

### FIELD OF INVENTION

The present invention relates to an information collaboration system.

This application claims priority to Japanese Patent Application No. 2018-6109, filed in Japan on January 18, 2018, the contents of which are incorporated herein by reference.

### Background Art

In a known accident information collection system, a vehicle transmits information about an accident including a relevant captured image, and the accident information is then stored into an information collection center (Patent Literature 1).

The vehicle incorporates a communication device that can communicate with the information collection center in the accident information collection system described in Patent Literature 1. In this accident information collection system, positioning information about the vehicle is obtained from a navigation device, and the information collection center collects accident information including the positioning information.

However, in the system described in Patent Literature 1, the vehicle incorporates the communication device for communicating with the information collection center and also the navigation device, and the information collection center has a storage for storing accident information.

Mobile terminals such as smartphones are used commonly nowadays. A mobile terminal typically includes a positioning information obtaining unit implemented by a positioning module for obtaining positioning information. The positioning information obtaining unit in the mobile terminal may obtain positioning information as accurately as a positioning information obtaining unit included in an in-vehicle device having the navigation function. Thus, positioning data detected by the mobile terminal may be used to identify the position of the vehicle.

For example, a navigation device described in Patent Literature 2 uses, while displaying a guide image showing the current position and the current traveling direction, positioning data obtained from a global positioning system (GPS) receiver included in a smartphone and positioning data obtained from its GPS receiver to calculate the current position and the current traveling direction.

### CITATION LIST

### PATENT LITERATURE

Patent Literature 1: Japanese Unexamined Patent Application Publication No. 2007-293536
Patent Literature 2: Japanese Unexamined Patent Application Publication No. 2012-141201

### SUMMARY OF INVENTION

### TECHNICAL PROBLEM

When a mobile terminal is connected to an information collection center and transmits accident information including positioning information, the mobile terminal carried into a vehicle may obtain positioning data that is not as accurate as the positioning data obtained by an in-vehicle device.

Also, when the vehicle is located in a tunnel or in a multistory parking space, the in-vehicle device may not obtain the position of the vehicle as accurately as the mobile terminal.

One or more aspects of the present invention are directed to estimating the position of a movable object more accurately with a relatively simple structure.

### SOLUTION TO PROBLEM

An information collaboration system according to a first aspect of the present disclosure includes an on-board device and a mobile terminal. The on-board device is mountable on a movable object. The mobile terminal communicates with the on-board device. The on-board device includes a sensor device and an on-board communication unit. The sensor device detects at least one sensor detection value selected from the group consisting of a speed, an angular velocity, and an acceleration of the movable object. The on-board communication unit transmits, to the mobile terminal, sensor information. The sensor information includes the at least one sensor detection value and a detection time at which the at least one sensor detection value is detected. The mobile terminal includes a terminal communication unit, an information synchronizer, and a movable-object position estimation unit. The terminal communication unit receives the sensor information from the on-board communication unit. The information synchronizer synchronizes positioning information obtained by a positioning information obtaining unit with the sensor information when a time difference between a time at which positional information included in the positioning information is obtained and the detection time is equal to or less than a predetermined value. The movable-object position estimation unit estimates a position of the movable object based on the positioning information and the sensor information synchronized with each other by the information synchronizer. The positioning information obtaining unit is included in the on-board device and/or in the mobile terminal.

The information collaboration system according to the first aspect can estimate the position of the movable object more accurately.

An information collaboration system according to a second aspect is the information collaboration system according to the first aspect in which the positioning information obtaining unit is included in the on-board device and in the mobile terminal. The mobile terminal further includes a determination unit. The determination unit determines, based on a predetermined condition, accuracy of a position indicated by the positioning information obtained by the positioning information obtaining unit in the on-board device and accuracy of a position indicated by the positioning information obtained by the positioning information obtaining unit in the mobile terminal.

The information collaboration system according to the second aspect can estimate the position of the movable object still more accurately.

An information collaboration system according to a third aspect is the information collaboration system according to the second aspect in which the positioning information obtaining unit in the on-board device is a positioning sensor. The determination unit determines that the positioning information obtained by the positioning information obtaining unit in the on-board device has lower position accuracy than the positioning information obtained by the positioning information obtaining unit in the mobile terminal under the predetermined condition that the positioning information obtained by the positioning information obtaining unit in the on-board device is detected based on satellite positioning data from three or fewer satellites.

The information collaboration system according to the third aspect can detect the positioning information with a relatively simple structure.

An information collaboration system according to a fourth aspect is the information collaboration system according to any one of the first to third aspects in which the mobile terminal includes a movement information obtaining unit. The movement information obtaining unit obtains movement information associating the position of the movable object with the sensor information. The mobile terminal is connected to a server to transmit the movement information through the terminal communication unit. The server includes a server communication unit and a server storage. The server communication unit communicates with the terminal communication unit. The server storage stores the movement information from the server communication unit.

The information collaboration system according to the fourth aspect can easily determine the operating state of the movable object by storing the current position and a sensor detection value associated with the current position into the server storage, thus providing movement information including the position of the movable object having higher accuracy.

### ADVANTAGEOUS EFFECTS

The information collaboration system according to the above aspects of the present invention can estimate the position of a movable object more accurately with a relatively simple structure.

### BRIEF DESCRIPTION OF THE DRAWINGS

Fig. 1 is a schematic diagram of an information collaboration system according to an embodiment.
Fig. 2 is a schematic block diagram of the information collaboration system according to the embodiment.
Fig. 3 is a diagram showing example data structures of sensor information, positioning information in an in-vehicle device, and positioning information in a mobile terminal according to the embodiment.
Fig. 4 is a diagram showing example data structures of sensor information, positioning information in the in-vehicle device, and positioning information in the mobile terminal according to the embodiment.
Fig. 5 is a flowchart showing processing or an operation performed by the information collaboration system according to the embodiment.
Fig. 6 is a schematic diagram of an information collaboration system according to a modification.
Fig. 7 is a schematic block diagram of the information collaboration system according to the modification.
Fig. 8 is a diagram showing example data structures of sensor information and positioning information in a mobile terminal according to the modification.
Fig. 9 is a flowchart showing processing or an operation performed by the information collaboration system according to the modification.

### DETAILED DESCRIPTION

An information collaboration system according to an embodiment will now be described with reference to the drawings.

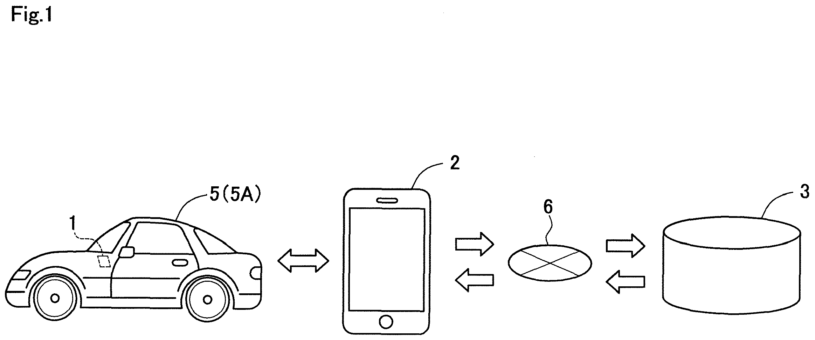

As shown in Fig. 1, the information collaboration system according to the present embodiment includes an in-vehicle device 1 mounted on a vehicle 5, a mobile terminal 2, and a server 3. In the example in Fig. 1, the vehicle 5 is an automobile 5A. In other words, the automobile 5A is a movable object, and the in-vehicle device 1 is an on-board device mounted on the movable object. The in-vehicle device 1 and the mobile terminal 2 can communicate with each other. The mobile terminal 2 and the server 3 can communicate with each other through an information communication network 6. The solid-white arrows in Fig. 1 indicate the flow of information.

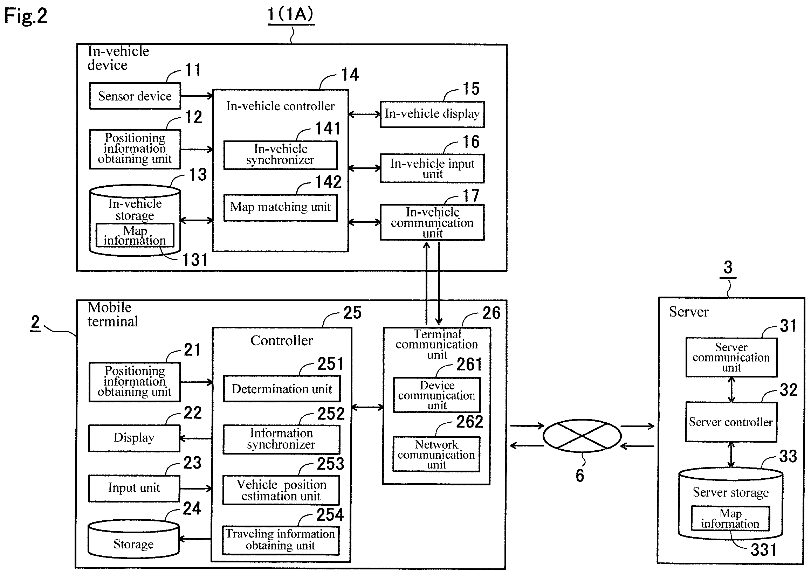

As shown in Fig. 2, the in-vehicle device 1 includes a sensor device 11, a positioning information obtaining unit 12, an in-vehicle storage 13, an in-vehicle controller 14, an in-vehicle display 15, an in-vehicle input unit 16, and an in-vehicle communication unit 17. The in-vehicle device 1 shown in Fig. 2 has the navigation function of presenting a route from the current position to a destination. The in-vehicle device 1 in Fig. 2 may hereafter be referred to as a first in-vehicle device 1A. The in-vehicle communication unit 17 may be referred to as an on-board communication unit.

The sensor device 11 obtains sensor information. The sensor device 11 includes, for example, a gyro sensor, an acceleration sensor, and a speed sensor. The sensor information can thus be vehicle information indicating the state of the vehicle 5 incorporating the in-vehicle device 1. The gyro sensor, the acceleration sensor, and the speed sensor each output a sensor detection value at time intervals of, for example, 100 ms or 300 ms. In the present embodiment, the sensor detection value is output at time intervals of 100 ms.

The positioning information obtaining unit 12 obtains positioning information at time intervals of, for example, 1 s. The positioning information obtaining unit 12 in the in-vehicle device 1 may hereafter be referred to as a first positioning information obtaining unit 12. The first positioning information obtaining unit 12 can detect the moving direction of the vehicle 5 from the displacement indicated by positional information included in the positioning information. The first positioning information obtaining unit 12 includes, for example, a global positioning system (GPS) sensor used in a satellite positioning system. The positioning information includes positional information and the time at which the positional information is obtained.

The in-vehicle storage 13 stores map information 131. The map information 131 stored in the in-vehicle storage 13 may hereafter be referred to as first map information 131. The in-vehicle storage 13 can store, in addition to the first map information 131, a navigation program or various items of information used to implement the navigation function. The in-vehicle storage 13 may further store current positional information and the sensor information. The sensor information includes a sensor detection value and the time at which the sensor detection value is detected. The in-vehicle storage 13 includes, for example, a non-volatile memory. Examples of non-volatile memories include a read-only memory (ROM), a flash memory, a hard disk drive (HDD), and a solid state drive (SSD).

The in-vehicle controller 14 includes an in-vehicle synchronizer 141 and a map matching unit 142. The in-vehicle synchronizer 141 synchronizes, based on a predetermined condition, the sensor information obtained by the sensor device 11 with the positioning information obtained by the first positioning information obtaining unit 12. The map matching unit 142 has the map matching function of estimating the position of the vehicle 5 on a map. The map matching function is to estimate the position of the vehicle 5 on a map by, for example, calculating a link likelihood. In other words, the map matching function uses the positioning information or the sensor information to identify the route on which the vehicle 5 travels in a road network. The road network includes node information and link information. The map matching unit 142 calculates a link likelihood from, for example, the positioning information or the sensor information and from the node information and the link information included in the first map information 131. The in-vehicle controller 14 performs the processing in accordance with the navigation program stored in the in-vehicle storage 13 to implement the map matching function. The navigation function includes a route search function. The in-vehicle controller 14 computes, with the route search function, a route from the current position to a destination to appear on the in-vehicle display 15. The route search function is to find a route from the current position obtained by, for example, the first positioning information obtaining unit 12 to a destination. The in-vehicle controller 14 is implemented by, for example, a central processing unit (CPU).

The in-vehicle display 15 displays various items of information input through the in-vehicle input unit 16. The in-vehicle device 1 is controlled and managed with, for example, various items of information input through the in-vehicle input unit 16. The in-vehicle display 15 may display the first map information 131. The in-vehicle display 15 includes, for example, a touchscreen combining a display and an input device. For the in-vehicle display 15 including a touchscreen, the display of the touchscreen corresponds to the in-vehicle display 15. The in-vehicle display 15 is not limited to a touchscreen. The in-vehicle display 15 may include a display alone. Examples of such displays include a liquid crystal display and an organic electroluminescence (EL) display.

The in-vehicle input unit 16 receives input information input by the user. The input information received by the in-vehicle input unit 16 includes various items of information associated with the in-vehicle device 1. The in-vehicle input unit 16 includes, for example, a touchscreen combining a display and an input device. For the in-vehicle input unit 16 including a touchscreen, the input device of the touchscreen corresponds to the in-vehicle input unit 16. The in-vehicle input unit 16 may be a voice recognition device. The voice recognition device recognizes a voice to receive input information. The in-vehicle input unit 16 may be a key entry device including physical keys.

The in-vehicle communication unit 17 communicates with the mobile terminal 2. The in-vehicle communication unit 17 complies with, for example, a communication protocol for near-field communication, such as Bluetooth (registered trademark) Low Energy (BLE).

The in-vehicle communication unit 17 outputs information processed by the in-vehicle controller 14, in addition to performing near-field communication. The processed information output through the in-vehicle communication unit 17 is, for example, a voice output from a voice output unit (not shown). The processed information output through the in-vehicle communication unit 17 is, for example, output information that is externally output from an external output unit (not shown). The output information is, for example, output to an external device that is connected by paring.

As shown in Fig. 2, the mobile terminal 2 includes a positioning information obtaining unit 21, a display 22, an input unit 23, a storage 24, a controller 25, and a terminal communication unit 26. In Fig. 2, the arrows indicate the flow of information.

The positioning information obtaining unit 21 obtains positioning information at time intervals of, for example, 1 s. The positioning information obtaining unit 21 in the mobile terminal 2 may hereafter be referred to as a second positioning information obtaining unit 21. The second positioning information obtaining unit 21 can detect the moving direction of the vehicle 5 carrying the mobile terminal 2 from the displacement indicated by positional information included in the positioning information. The second positioning information obtaining unit 21 includes a GPS sensor. The second positioning information obtaining unit 21 may obtain positioning information in a manner other than with a GPS sensor. When the mobile terminal 2 communicates with a base station included in an external public communication network, the second positioning information obtaining unit 21 may obtain positioning information from the base station. When the mobile terminal 2 communicates with a base station included in an external public communication network, the second positioning information obtaining unit 21 may complement the positioning information obtained with the GPS sensor with the positioning information obtained from the base station. In the present embodiment, the second positioning information obtaining unit 21 can use the positioning information obtained from a base station, in addition to the positioning information obtained with the GPS sensor. The positioning information includes positional information and the time at which the positional information is obtained.

The display 22 displays various items of information input to the input unit 38 to, for example, manage the mobile terminal 2. The display 22 may display the first map information 131. The display 22 includes, for example, a touchscreen combining a display and an input device. For the display 22 including a touchscreen, the display of the touchscreen corresponds to the display 22. The display 22 is not limited to a touchscreen. The display 22 may include a display alone. Examples of such displays include a liquid crystal display and an organic EL display.

The input unit 23 receives input information input by the user. The input information received by the input unit 23 includes various items of information associated with the mobile terminal 2. The input unit 23 includes, for example, a touchscreen combining a display and an input device. For the input unit 23 including a touchscreen, the input device of the touchscreen corresponds to the input unit 23. The input unit 23 may be a voice recognition device. The voice recognition device recognizes a voice to receive input information. The input unit 23 may be a key entry device including physical keys.

The storage 24 stores various items of information to be used in the mobile terminal 2. The storage 24 stores the positioning information and the sensor information transmitted from the in-vehicle device 1. The storage 24 may prestore mobile map information, separately from the first map information 131. The mobile map information may be provided to the mobile terminal 2 from, for example, the in-vehicle device 1. The mobile map information may be provided to the mobile terminal 2 from the server 3. The storage 24 includes, for example, a non-volatile memory. Examples of non-volatile memories include a ROM, a flash memory, and an SSD.

As shown in Fig. 2, the controller 25 includes a determination unit 251, an information synchronizer 252, a vehicle position estimation unit 253, and a traveling information obtaining unit 254. The vehicle position estimation unit 253 may hereafter be referred to as a movable-object position estimation unit. Similarly, the traveling information obtaining unit 254 may be referred to as a movement information obtaining unit. The controller 25 is implemented by, for example, a CPU.

The determination unit 251 determines the accuracy of positioning information. For example, the determination unit 251 determines positioning information having a higher likelihood of being more accurate from the positioning information obtained by the first positioning information obtaining unit 12 and the positioning information obtained by the second positioning information obtaining unit 21.

The information synchronizer 252 synchronizes, for example, the positioning information obtained by the in-vehicle device 1 and the positioning information obtained by the mobile terminal 2 with the sensor information based on the time at which the positioning information is obtained and the time at which the sensor information is detected. The information synchronizer 252 may synchronize the positioning information obtained by the in-vehicle device 1 or the positioning information obtained by the mobile terminal 2 with the sensor information based on the time at which the positioning information is obtained and the time at which the sensor information is detected.

The vehicle position estimation unit 253 estimates positional information indicating the position of the vehicle 5 more accurately based on either the positioning information obtained by the first positioning information obtaining unit 12 or the positioning information obtained by the second positioning information obtaining unit 21 and based on the sensor information obtained by the sensor device 11.

The traveling information obtaining unit 254 obtains traveling information. The traveling information includes the position of the vehicle and the sensor information in an associated manner. The traveling information may hereafter be referred to as movement information. The position of the vehicle may be referred to as the position of the movable object.

As shown in Fig. 2, the terminal communication unit 26 includes a device communication unit 261 and a network communication unit 262.

The device communication unit 261 communicates with the in-vehicle device 1. The terminal communication unit 26 communicates with the in-vehicle communication unit 17 in the in-vehicle device 1 under a communication protocol for near-field communication, such as BLE.

The network communication unit 262 communicates with the server 3 through the information communication network 6. The mobile terminal 2 communicates with the server 3 bidirectionally through the information communication network 6.

The mobile terminal 2 may also obtain, through the network communication unit 262, positioning information from a base station in a public communication network or an access point in Wi-Fi (registered trademark). In this case, the network communication unit 262 serves as a part of the second positioning information obtaining unit 21.

When the first positioning information obtaining unit 12 in the in-vehicle device 1 has poor reception for satellite positioning data from positioning satellites, the mobile terminal 2 can obtain, with the network communication unit 262 serving as the second positioning information obtaining unit 21, positioning information with higher accuracy than the positioning information obtained by the first positioning information obtaining unit 12. Examples of the locations where the vehicle 5 has poor reception for satellite positioning data from positioning satellites include a street with tall buildings, a multistory parking space, and an underground parking space. The mobile terminal 2 can also reduce, with the network communication unit 262 serving as the second positioning information obtaining unit 21, multipath errors resulting from the reflection from a structure, such as a building.

In other words, the in-vehicle device 1 can obtain positioning information more accurately than the mobile terminal 2 under a good condition, in which the in-vehicle device 1 properly receives radio waves from multiple positioning satellites. When the in-vehicle device 1 is under a poor condition, the mobile terminal 2 may obtain positioning information more accurately than the in-vehicle device 1. The in-vehicle device 1 under a poor condition refers to, for example, the in-vehicle device 1 being incapable of receiving radio waves from multiple positioning satellites. The in-vehicle device 1 being incapable of receiving radio waves from multiple positioning satellites refers to, for example, the in-vehicle device 1 being on a street with tall buildings, in a multistory parking space, or in an underground parking space.

The terminal communication unit 26 outputs information processed by the controller 25, in addition to performing near-field communication or network communication. The processed output information through the terminal communication unit 26 is, for example, a voice output from a voice output unit (not shown). The processed output information through the terminal communication unit 26 includes information that is externally output from an external output unit (not shown). The external output from the external output unit is, for example, transmitting information to an external device that is connected by paring.

As shown in Fig. 2, the server 3 includes a server communication unit 31, a server controller 32, and a server storage 33.

The server communication unit 31 communicates with the network communication unit 262 in the mobile terminal 2 through the information communication network 6. The server 3 communicates with the mobile terminal 2 bidirectionally through the information communication network 6.

As shown in Fig. 2, the server controller 32 controls the server storage 33 to store traveling information from the mobile terminal 2 received by the server communication unit 31. The server controller 32 is implemented by, for example, a CPU.

The server storage 33 stores the traveling information and map information 331. The traveling information includes the positional information about the vehicle 5. The map information 331 may hereafter be referred to as second map information 331. The server storage 33 includes, for example, a non-volatile memory.

The time at which the sensor device 11 in the in-vehicle device 1 detects sensor detection values, the time at which the first positioning information obtaining unit 12 in the in-vehicle device 1 obtains positioning information, and the time at which the second positioning information obtaining unit 21 in the mobile terminal 2 obtains positioning information will now be described.

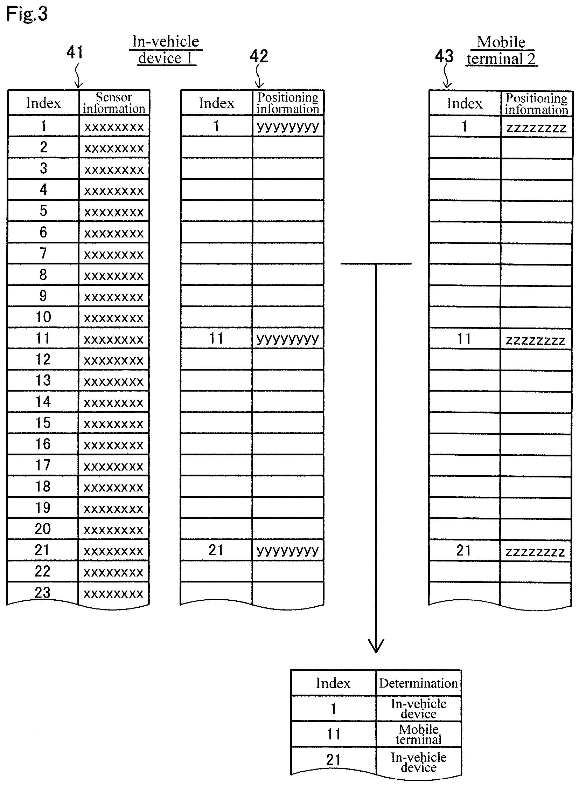

The sensor device 11 in the in-vehicle device 1 includes, for example, a gyro sensor, a speed sensor, and an acceleration sensor. The gyro sensor, the speed sensor, and the acceleration sensor synchronize with one another for every 100 ms and output sensor detection values. The gyro sensor, the speed sensor, and the acceleration sensor output the sensor detection values with substantially no time error. For example, the time error may be as short as about 1 ms. The sensor information includes the sensor detection values detected for every 100 ms. As in an example data structure 41 shown in Fig. 3, the sensor detection values detected for every 100 ms are associated with an index number for every 100 ms. The sensor detection values associated with an index number are stored into the in-vehicle storage 13. The data structure 41 may hereafter be referred to as a first data structure 41. The index number is assigned based on the count at the clock rate of the CPU. The gyro sensor, the speed sensor, and the acceleration sensor detect their sensor detection values at substantially the same time. The sensor detection values detected at the same time are associated with the same index number. The index number increments from 1 to a predetermined value, such as 2⁶⁴, returns to 1, and again increments to the predetermined value in a repeated manner.

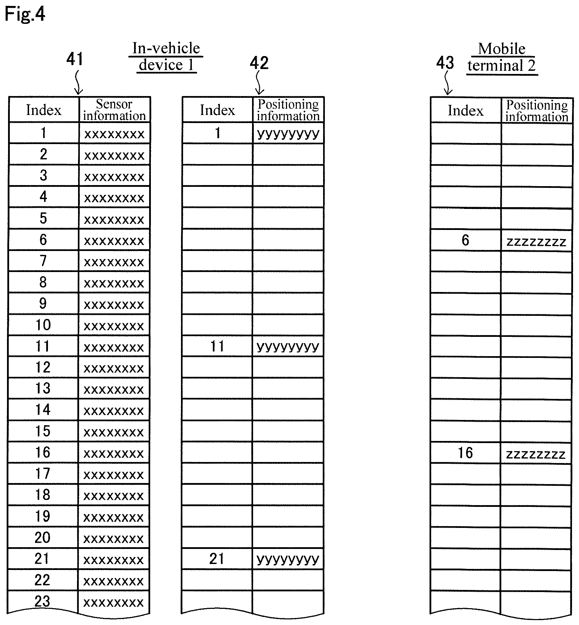

The first positioning information obtaining unit 12 in the in-vehicle device 1 and the second positioning information obtaining unit 21 in the mobile terminal 2 both obtain positioning information at intervals of 1 s. The positioning information obtained by the positioning information obtaining unit 12 in the in-vehicle device 1 at intervals of 1 s is associated with an index number that increments by 10 for every 1 s. The positioning information associated with an index number is stored into the in-vehicle storage 13. The positioning information obtained by the positioning information obtaining unit 21 in the mobile terminal 2 at intervals of 1 s is associated with an index number that increments by 10 for every 1 s. The positioning information associated with an index number is stored into the storage 24. For example, a data structure 42 for the in-vehicle device 1 shown in Fig. 3 includes sets of positioning information obtained by the first positioning information obtaining unit 12 in the in-vehicle device 1. The sets of positioning information are associated with index numbers 1, 11, and subsequent numbers. The data structure 42 may hereafter be referred to as a second data structure 42. In the same manner, for example, a data structure 43 for the mobile terminal 2 shown in Fig. 3 includes sets of positioning information obtained by the second positioning information obtaining unit 21 in the mobile terminal 2. The sets of positioning information are associated with index numbers 1, 11, and subsequent numbers. The data structure 43 may hereafter be referred to as a third data structure 43. Although the index numbers start from 1 in the present embodiment, the index numbers may start from any number other than 1. For example, as in the third data structure 43 shown in Fig. 4 including the sets of positioning information obtained by the mobile terminal 2, the index number may start from 6. In this case, the sets of positioning information obtained by the second positioning information obtaining unit 21 in the mobile terminal 2 are associated with index numbers of 6, 16, and subsequent numbers. Each set of positioning information included in the second data structure 42 and the third data structure 43 shown in Figs. 3 and 4 includes positional information and information indicating the time at which the positional information is obtained.

The second positioning information obtaining unit 21 in the mobile terminal 2 computes the positional information using satellite positioning data received from positioning satellites. The second positioning information obtaining unit 21 thus cannot obtain the positional information at time intervals shorter than, for example, 1 s. The positioning information obtained at time intervals of 1 s may cause a time lag including errors from the sensor detection values detected at time intervals of 100 ms. Without this time lag being corrected, the current position of the vehicle 5 is likely to be inaccurate when estimated by the vehicle position estimation unit 253 based on the positioning information obtained by the second positioning information obtaining unit 21 in the mobile terminal 2 and the sensor detection values from the sensor device 11.

Also, the in-vehicle device 1 uses a predetermined time to transmit data to the mobile terminal 2. The mobile terminal 2 thus receives, from the in-vehicle device 1, the positioning information and the sensor information delayed by the transmission time. In the information collaboration system, the positioning information and the sensor information obtained by the in-vehicle device 1 and received by the mobile terminal 2 can have a time lag if directly synchronized with the positioning information obtained by the second positioning information obtaining unit 21 in the mobile terminal 2 upon reception.

In the information collaboration system according to the present embodiment, the information synchronizer 252 in the mobile terminal 2 synchronizes the positioning information with the sensor information when a time difference between the time at which the positioning information is obtained and the detection time of the sensor detection values is equal to or less than a predetermined value. The predetermined value is less than the sampling interval for the sensor device 11. In the present embodiment, the sampling interval used in the sensor device 11 is 100 ms, and thus the predetermined value can be, for example, 50 ms.

In the information collaboration system according to the present embodiment, the mobile terminal 2 includes the determination unit 251. The determination unit 251 determines positioning information having a higher likelihood of being more accurate from the positioning information obtained by the first positioning information obtaining unit 12 in the in-vehicle device 1 and the positioning information obtained by the second positioning information obtaining unit 21 in the mobile terminal 2. In the information collaboration system, the determination unit 251 included in the mobile terminal 2 allows the use of the positioning information having higher position accuracy selectively from the positioning information obtained by the first positioning information obtaining unit 12 in the in-vehicle device 1 and the positioning information obtained by the second positioning information obtaining unit 21 in the mobile terminal 2, to estimate the position of the vehicle 5.

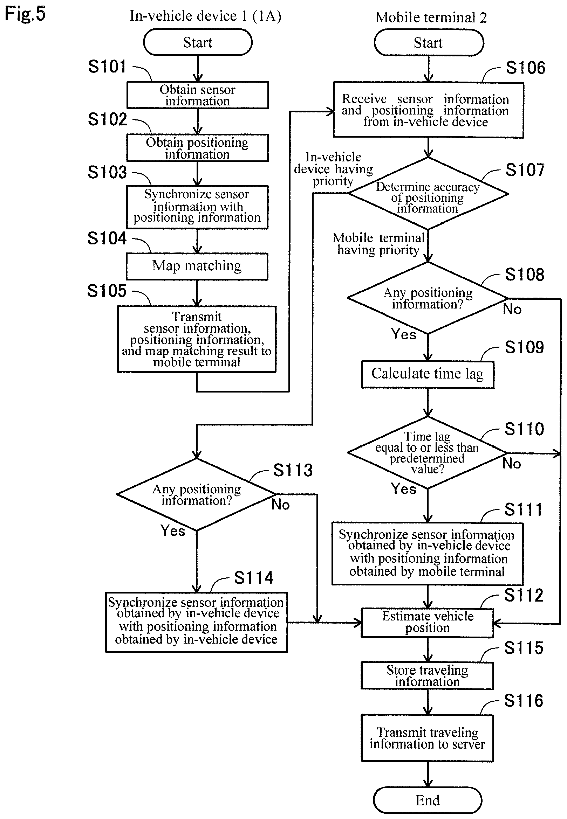

A determination method used by the determination unit 251 in the information collaboration system according to the present embodiment will now be described based on the flowchart in Fig. 5.

The in-vehicle device 1 is first activated in response to the vehicle 5 being powered. After the in-vehicle device 1 is activated, the sensor device 11 obtains sensor information (step 101). Hereafter, each step is abbreviated as S. The sensor information includes sensor detection values and information indicating the time at which the sensor detection values are detected.

In the in-vehicle device 1, the first positioning information obtaining unit 12 obtains positioning information in parallel with the sensor device 11 obtaining the sensor information (S102). The positioning information includes positional information and the time at which the positional information is obtained. The first positioning information obtaining unit 12 may obtain the positioning information from a base station in a public communication network or an access point in Wi-Fi. The same applies hereafter.

After the first positioning information obtaining unit 12 obtains the positioning information, the in-vehicle synchronizer 141 synchronizes the sensor information with the positioning information (S103). For example, for any index number associated with both sensor information and positioning information, the in-vehicle synchronizer 141 uses the positional information included in the positioning information directly as the positional information about the vehicle 5. For any index number associated with sensor information alone, the in-vehicle synchronizer 141 estimates the positional information using the sensor information and the positional information associated with the preceding index number. The in-vehicle synchronizer 141 uses the estimated positional information as the positional information about the vehicle 5 associated with the index number with the sensor information alone. In the example shown in Fig. 3, the in-vehicle synchronizer 141 uses, for each of the index numbers 1, 11, and 21, the positional information included in the positioning information as the positional information about the vehicle 5 obtained after synchronization. For each of the index numbers 2 to 10, 12 to 20, 22, and 23, the in-vehicle synchronizer 141 uses positional information estimated using the sensor information and the positional information associated with the preceding index number as the positional information about the vehicle 5 associated with the index number.

After the in-vehicle synchronizer 141 synchronizes the sensor information with the positioning information, the map matching unit 142 performs map matching against the first map information 131 based on the positional information about the vehicle 5 obtained after the synchronization (S104).

After the in-vehicle synchronizer 141 performs map matching, the in-vehicle device 1 transmits the sensor information, the positioning information, and the result from the map matching to the mobile terminal 2 through the in-vehicle communication unit 17 (S105). In the present embodiment, in addition to the sensor information and the positioning information, the in-vehicle device 1 transmits, to the mobile terminal 2, other items of information to be used by the determination unit 251 in the mobile terminal 2.

The mobile terminal 2 receives the sensor information and the positioning information transmitted from the in-vehicle device 1 through the terminal communication unit 26 (S106). The determination unit 251 then compares the first positioning information obtaining unit 12 with the second positioning information obtaining unit 21 and determines the obtaining unit that can obtain positioning information having higher position accuracy (S107). The determination unit 251 performs the determination based on, for example, one or any combination of the conditions described below.

When the first positioning information obtaining unit 12 in the in-vehicle device 1 obtains satellite positioning data from three or fewer positioning satellites, the determination unit 251 determines that the positioning information obtained by the in-vehicle device 1 has lower position accuracy than the positioning information obtained by the mobile terminal 2. The other items of information transmitted from the in-vehicle device 1 to the mobile terminal 2 include information indicating the number of positioning satellites from which the satellite positioning data is obtained. In other words, the determination unit 251 determines one of the first positioning information obtaining unit 12 and the second positioning information obtaining unit 21 to obtain positioning information having higher position accuracy based on the information indicating the number of positioning satellites from which the satellite positioning data is obtained.

When the satellite positioning data from positioning satellites received by the first positioning information obtaining unit 12 in the in-vehicle device 1 has a predetermined radio field intensity or lower, the determination unit 251 determines that the positioning information obtained by the in-vehicle device 1 has lower position accuracy than the positioning information obtained by the mobile terminal 2. The information indicating the radio field intensity for the satellite positioning data is one of the other items of information transmitted from the in-vehicle device 1 to the mobile terminal 2. In other words, the determination unit 251 determines one of the first positioning information obtaining unit 12 and the second positioning information obtaining unit 21 to obtain positioning information having higher position accuracy based on the information indicating the radio field intensity for the satellite positioning data transmitted from positioning satellites.

When the satellite positioning data from positioning satellites received by the first positioning information obtaining unit 12 in the in-vehicle device 1 is missing intermittently, the determination unit 251 determines that the positioning information obtained by the in-vehicle device 1 has lower position accuracy than the positioning information obtained by the mobile terminal 2. In one example, the satellite positioning data from positioning satellites received by the first positioning information obtaining unit 12 in the in-vehicle device 1 is missing intermittently when the speed of the vehicle 5 calculated from the satellite positioning data is an unusual speed. The usually unlikely speed is a detected speed of, for example, 500 kilometers per hour. In another example, the satellite positioning data from positioning satellites received by the first positioning information obtaining unit 12 in the in-vehicle device 1 is missing intermittently when the speed is several times higher than a legally permitted speed. In still another example, the satellite positioning data from positioning satellites received by the first positioning information obtaining unit 12 in the in-vehicle device 1 is missing intermittently when the positioning information calculated from the satellite positioning data indicates a movement beyond a predetermined range.

When the vehicle 5 is located on a street with tall buildings in the first map information 131 as estimated using the positioning information obtained by the in-vehicle device 1, the determination unit 251 determines that the in-vehicle device 1 has lower position accuracy than the mobile terminal 2. The first map information 131 is one of the other items of information transmitted from the in-vehicle device 1 to the mobile terminal 2. The mobile terminal 2 may use mobile map information stored in the mobile terminal 2. The mobile terminal 2 may also use mobile map information available through communication other than with the in-vehicle device 1. The mobile terminal 2 may use the second map information 331 available from, for example, the server 3 other than the in-vehicle device 1. In other words, the mobile terminal 2 may use external map information available from an external device as mobile map information.

When the in-vehicle device 1 is at a predetermined temperature or temperatures lower than the predetermined temperature, the determination unit 251 determines that the in-vehicle device 1 has lower position accuracy than the mobile terminal 2. When the in-vehicle device 1 includes a temperature sensor, the temperature information detected by the temperature sensor may be one of the other items of information transmitted from the in-vehicle device 1 to the mobile terminal 2. The determination unit 251 determines one of the in-vehicle device 1 and the mobile terminal 2 to have higher position accuracy based on the temperature information. The in-vehicle device 1 uses sensor detection values to complement the positioning information obtained by the first positioning information obtaining unit 12. However, the sensor device 11 including a gyro sensor, which tends to have fluctuating sensitivities depending on temperature, may not fully operate under unstable temperatures.

When a predetermined time has not passed after the in-vehicle device 1 is turned on, the determination unit 251 determines that the in-vehicle device 1 has lower position accuracy than the mobile terminal 2. The information indicating the time at which the in-vehicle device 1 is turned on is one of the other items of information. The determination unit 251 determines one of the in-vehicle device 1 and the mobile terminal 2 to have higher position accuracy based on the time information. The in-vehicle device 1 uses about 30 to 60 s to start up after turned on. Before the in-vehicle device 1 starts up, the first positioning information obtaining unit 12 may not detect accurate positioning information.

As described above, the determination unit 251 determines positioning information having higher position accuracy from the positioning information obtained by the first positioning information obtaining unit 12 and the positioning information obtained by the second positioning information obtaining unit 21. When the determination unit 251 determines that the positioning information obtained by the second positioning information obtaining unit 21 has higher position accuracy than the positioning information obtained by the first positioning information obtaining unit 12 (the mobile terminal having priority in S107), the information synchronizer 252 determines whether the index number associated with the sensor information to be synchronized is associated with any positioning information obtained by the mobile terminal 2. When the index number associated with the sensor information to be synchronized is associated with positioning information obtained by the mobile terminal 2 (Yes in S108), the information synchronizer 252 calculates a time lag or time difference between the time at which the detection values included in the sensor information are detected by the in-vehicle device 1 and the time at which the positional information included in the positioning information is obtained by the mobile terminal 2 (S109).

When the time lag is equal to or less than a predetermined value (Yes in S110), the information synchronizer 252 in the mobile terminal 2 synchronizes the sensor information obtained by the in-vehicle device 1 with the positioning information obtained by the mobile terminal 2 (S111). The predetermined value is less than 100 ms, which is the sampling interval used in the sensor device 11. The predetermined value is, for example, 50 ms.

When synchronizing the sensor information obtained by the in-vehicle device 1 with the positioning information obtained by the mobile terminal 2, the information synchronizer 252 in the mobile terminal 2 uses the positional information corresponding to the sensor information associated with an index number N (N is a natural number) as the positional information associated with an index number (N-n) after the synchronization. This reduces the time lag. Although n = 1 in the present embodiment, n may be a natural number equal to or greater than 2.

After the information synchronizer 252 in the mobile terminal 2 synchronizes the sensor information obtained by the in-vehicle device 1 with the positioning information obtained by the mobile terminal 2, the vehicle position estimation unit 253 calculates, for any index number associated with sensor information alone, the positional information about the vehicle 5 using the sensor information and the positioning information associated with the preceding index number. The vehicle position estimation unit 253 estimates the positional information about the vehicle 5 from the calculation result (S112). When the time lag between the time at which the sensor detection values included in the sensor information are detected by the in-vehicle device 1 and the time at which the positional information included in the positioning information is obtained by the mobile terminal 2 is greater than the predetermined value (No in S110), the vehicle position estimation unit 253 estimates the positional information about the vehicle 5 for the index number in the same manner (S112).

When the determination unit 251 determines that the positioning information obtained by the first positioning information obtaining unit 12 in the in-vehicle device 1 has higher position accuracy than the positioning information obtained by the second positioning information obtaining unit 21 in the mobile terminal 2 (the in-vehicle device having priority in S107) and when the index number with data to be synchronized is associated with any positioning information obtained by the in-vehicle device 1 (Yes in S113), the information synchronizer 252 synchronizes the sensor information obtained by the in-vehicle device 1 with the positioning information obtained by the in-vehicle device 1 (S114). The sensor information obtained by the in-vehicle device 1 and the positioning information obtained by the in-vehicle device 1 are synchronized using the positional information included in the positioning information obtained by the in-vehicle device 1 as the positional information about the vehicle 5 obtained after the synchronization.

After the information synchronizer 252 in the mobile terminal 2 synchronizes the sensor information obtained by the in-vehicle device 1 with the positioning information obtained by the in-vehicle device 1, the vehicle position estimation unit 253 calculates, for an index number associated with sensor information alone, the positional information about the vehicle 5 using the sensor information and the positioning information associated with the preceding index number. The vehicle position estimation unit 253 estimates the positional information about the vehicle 5 from the calculation result (S112).

When the determination unit 251 determines that the positioning information obtained by the second positioning information obtaining unit 21 in the mobile terminal 2 has higher position accuracy than the positioning information obtained by the first positioning information obtaining unit 12 in the in-vehicle device 1 (the mobile terminal having priority in S107) and when the index number with data to be synchronized is associated with no positioning information obtained by the mobile terminal 2 (No in S108), the vehicle position estimation unit 253 calculates the positional information about the vehicle 5 using the sensor information and the positioning information associated with the preceding index number. The vehicle position estimation unit 253 estimates the positional information about the vehicle 5 from the calculation result (S112).

When the determination unit 251 determines that the positioning information obtained by the first positioning information obtaining unit 12 in the in-vehicle device 1 has higher position accuracy than the positioning information obtained by the second positioning information obtaining unit 21 in the mobile terminal 2 (the in-vehicle device having priority in S107) and when the index number with data to be synchronized is associated with no positioning information obtained by the in-vehicle device 1 (No in S113), the vehicle position estimation unit 253 calculates the positional information about the vehicle 5 using the sensor information and the positioning information associated with the preceding index number. The vehicle position estimation unit 253 estimates the positional information about the vehicle 5 from the calculation result (S112).

After the vehicle position estimation unit 253 estimates the position of the vehicle 5, the traveling information obtaining unit 254 in the mobile terminal 2 stores traveling information (S115). The traveling information obtaining unit 254 may store the traveling information into the storage 24.

The traveling information obtaining unit 254 accumulates a predetermined amount of traveling information. The network communication unit 262 transmits the traveling information accumulated in the traveling information obtaining unit 254 to the server 3 (S116). When, for example, the in-vehicle device 1 detects any predetermined abnormality, the information collaboration system may cause the traveling information accumulated during a predetermined time before and after the abnormality detection to be transmitted to the server 3. Examples of detectable abnormalities include the acceleration of the vehicle 5 exceeding a predetermined value and an airbag being activated in the vehicle 5. The traveling information includes at least the positional information and the sensor information for the vehicle 5. The traveling information may also include image data newly obtained by, for example, a drive recorder.

When the positioning information obtained by the first positioning information obtaining unit 12 in the in-vehicle device 1 and the positioning information obtained by the second positioning information obtaining unit 21 in the mobile terminal 2 both have predetermined position accuracy, the two sets of positioning information may be combined and used to generate the traveling information. The resultant positioning information may be synchronized with the sensor information in the in-vehicle device 1 and used to estimate the vehicle position.

In the information collaboration system according to the present embodiment, more accurate traveling information can be obtained with the above procedure.

In the information collaboration system according to the present embodiment, the server storage 33 stores the traveling information that includes highly accurate positional information and the sensor information for the vehicle 5, thus allowing more accurate determination of the situation before and after a traffic accident.

An information collaboration system according to a modification of the above embodiment will now be described with reference to the drawings. The same components as those in the information collaboration system according to the above embodiment are given the same reference numerals, and may not be described.

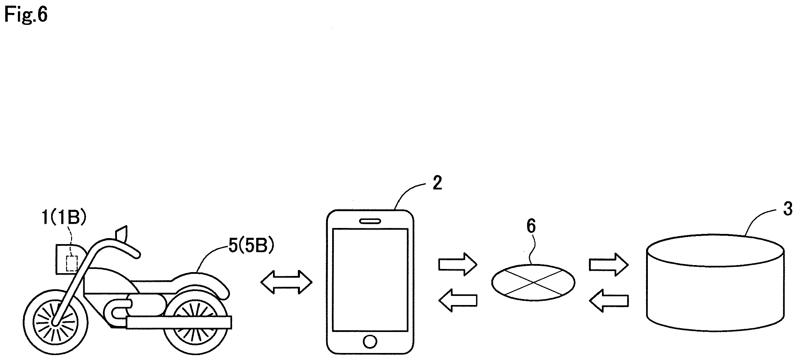

As shown in Fig. 6, the information collaboration system according to the modification includes an in-vehicle device 1, a mobile terminal 2, and a server 3. The in-vehicle device 1 in Fig. 6 does not have the navigation function. The in-vehicle device 1 without the navigation function may hereafter be referred to as a second in-vehicle device 1B. A vehicle 5 incorporating the second in-vehicle device 1B is, for example, a motorcycle 5B with a narrow display area at the cockpit. In other words, the motorcycle 5B is a movable object, and the in-vehicle device 1 is an on-board device mounted on a movable object.

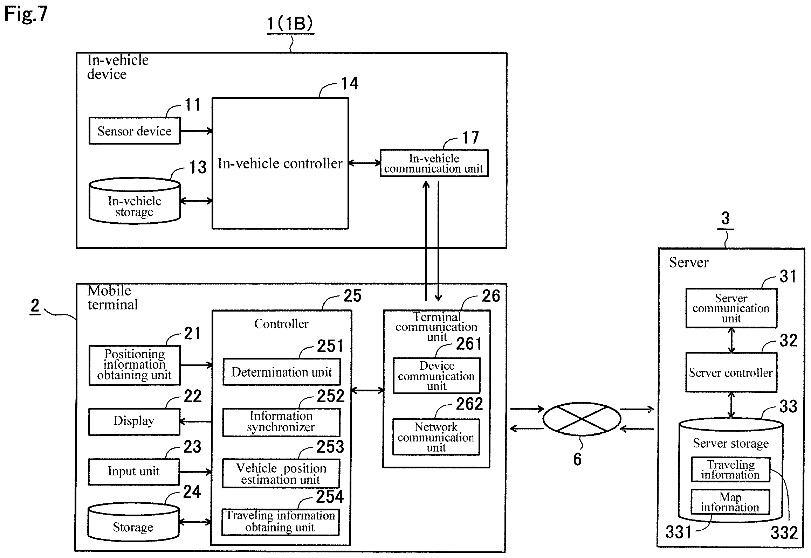

As shown in Fig. 7, the second in-vehicle device 1B includes a sensor device 11, an in-vehicle storage 13, an in-vehicle controller 14, and an in-vehicle communication unit 17. The second in-vehicle device 1B does not include the positioning information obtaining unit. The in-vehicle controller 14 performs processing based on various items of information or various programs to control components in the vehicle.

As shown in Fig. 7, the mobile terminal 2 includes a second positioning information obtaining unit 21, a display 22, an input unit 23, a storage 24, a controller 25, and a terminal communication unit 26.

As shown in Fig. 7, the server 3 includes a server communication unit 31, a server controller 32, and a server storage 33.

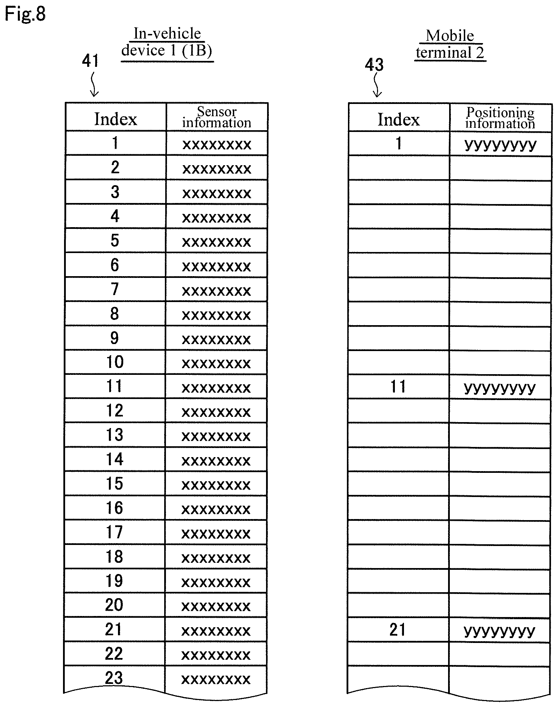

A method for transmitting traveling information to the server 3 in the information collaboration system according to the modification will now be described. In the present modification, the second in-vehicle device 1B does not obtain positioning information. Thus, data used in the information collaboration system has the data structures shown in Fig. 8. As illustrated in Fig. 8, a first data structure 41 for the in-vehicle device 1 includes sets of sensor information each associated with an index number. A third data structure 43 for the mobile terminal 2 includes sets of positioning information each associated with an index number.

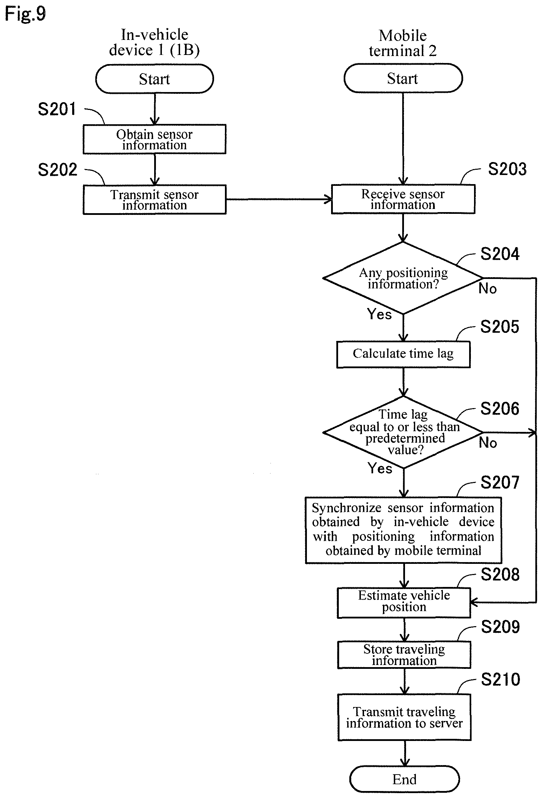

A determination method used by a determination unit 251 in the information collaboration system according to the modification will now be described based on the flowchart in Fig. 9. The second in-vehicle device 1B is first activated in response to the vehicle 5 being powered. After the second in-vehicle device 1B is activated, the sensor device 11 obtains sensor information (S201). The sensor information includes sensor detection values and information indicating the time at which the sensor detection values are detected.

After the sensor device 11 obtains the sensor information, the second in-vehicle device 1B transmits the sensor information to the mobile terminal 2 through the in-vehicle communication unit 17 (S202).

The mobile terminal 2 receives the sensor information transmitted from the in-vehicle device 1 (S203). The information synchronizer 252 in the mobile terminal 2 determines whether the index number associated with the sensor information to be synchronized is associated with any positioning information obtained by the mobile terminal 2 (S204). When determining that the positioning information to be synchronized with the sensor information is available (Yes in S204), the information synchronizer 252 calculates the time lag or time difference between the time at which the sensor detection values included in the sensor information are detected and the time at which the positional information included in the positioning information is obtained (S205).

When the calculated time lag is equal to or less than a predetermined value (Yes in S206), the information synchronizer 252 in the mobile terminal 2 synchronizes the sensor information obtained by the second in-vehicle device 1B with the positioning information obtained by the mobile terminal 2 (S207). The predetermined value is less than 100 ms, which is the sampling interval used in the sensors. The predetermined value is, for example, 50 ms.

When synchronizing the sensor information obtained by the in-vehicle device 1 with the positioning information obtained by the mobile terminal 2, the information synchronizer 252 in the mobile terminal 2 uses the positional information corresponding to the sensor information associated with an index number N (N is a natural number) as the positional information associated with an index number (N-n) after the synchronization. This reduces the time difference between the time at which the sensor detection values in the sensor information are detected and the time at which the positional information in the positioning information is obtained by the mobile terminal 2. Although n = 1 in the present modification, n may be a natural number equal to or greater than 2.

After the information synchronizer 252 in the mobile terminal 2 synchronizes the sensor information obtained by the second in-vehicle device 1B with the positioning information obtained by the mobile terminal 2, the vehicle position estimation unit 253 calculates, for an index number associated with sensor information alone, the positional information about the vehicle 5 using the sensor information and the positioning information associated with the preceding index number. The vehicle position estimation unit 253 estimates the positional information about the vehicle 5 from the calculation result (S208). When the time lag between the time at which the sensor detection values in the sensor information are detected by the second in-vehicle device 1B and the time at which the positional information in the positioning information is obtained by the mobile terminal 2 is greater than the predetermined value (No in S206), the vehicle position estimation unit 253 estimates the positional information about the vehicle 5 associated with the index number in the same manner as when the index numbers are associated with the sensor information alone (S208).

When the index number associated with the sensor information to be synchronized is associated with no positioning information obtained by the mobile terminal 2 (No in S204), the vehicle position estimation unit 253 calculates the positional information about the vehicle 5 using the sensor information and the positioning information associated with the preceding index number. The vehicle position estimation unit 253 estimates the positional information about the vehicle 5 from the calculation result (S208).

After the vehicle position estimation unit 253 estimates the position of the vehicle 5, the mobile terminal 2 stores traveling information using the traveling information obtaining unit 254 (S209). The traveling information obtaining unit 254 may store the traveling information into the storage 24.

The traveling information obtaining unit 254 accumulates a predetermined amount of traveling information. The network communication unit 262 transmits the traveling information accumulated in the traveling information obtaining unit 254 to the server 3 (S210). When, for example, the second in-vehicle device 1B detects any predetermined abnormality, the information collaboration system may cause the traveling information accumulated during a predetermined time before and after the abnormality detection to be transmitted to the server 3. An example of a detectable abnormality is the acceleration of the vehicle 5 exceeding a predetermined value. The traveling information includes at least the positional information and the sensor information for the vehicle 5. The traveling information may also include image data newly obtained by, for example, a drive recorder.

In the information collaboration system according to the modification described above, the server storage 33 stores the positional information about the vehicle 5 and the traveling information associated with the positional information. This facilitates determination of the situation before and after any accident in the vehicle 5. The structure can also provide traveling information including the vehicle position with higher accuracy. In the information collaboration system according to the modification, the mobile terminal 2 alone, instead of both the in-vehicle device 1 and the mobile terminal 2, includes the positioning information obtaining unit 21. In another modification, the in-vehicle device 1 alone instead may include the positioning information obtaining unit 12. The information collaboration system according to the embodiment or the modification described above may additionally include other devices or systems that implement the processing or the functions of the in-vehicle device 1, the mobile terminal 2, and the server 3 in a manner distributed between the other devices or systems. The movable object is not limited to the automobile 5A and the motorcycle 5B. The movable object may be a snowmobile, a ship, or an air vehicle.

The present invention described above may be embodied in various other forms without departing from the spirit or the main features of the present invention. The embodiments described above are thus merely illustrative in all respects and should not be construed to be restrictive. In other words, the above embodiments are mere examples.

### REFERENCE SIGNS LIST

- 1, 1A, 1B: in-vehicle device
- 11: sensor device
- 12: first positioning information obtaining unit
- 17: in-vehicle communication unit
- 2: mobile terminal
- 21: second positioning information obtaining unit
- 251: determination unit
- 252: information synchronizer
- 253: vehicle position estimation unit
- 254: traveling information obtaining unit
- 26: terminal communication unit
- 3: server
- 31: server communication unit
- 33: server storage
- 5, 5A, 5B: vehicle

## Claims

1. An information collaboration system, comprising:
an on-board device (1) mountable on a movable object (5) ; and
a mobile terminal (2) configured to communicate with the on-board device,
wherein the on-board device includes
a sensor device (11) configured to detect at least one sensor detection value selected from the group consisting of a speed, an angular velocity, and an acceleration of the movable object, and
an on-board communication unit (17) configured to transmit, to the mobile terminal, sensor information including the at least one sensor detection value and a detection time at which the at least one sensor detection value is detected,
the mobile terminal includes
a terminal communication unit (26) configured to receive the sensor information from the on-board communication unit,
an information synchronizer (252) configured to synchronize positioning information obtained by a positioning information obtaining unit (12,21) with the sensor information when a time difference between a time at which positional information included in the positioning information is obtained and the detection time is equal to or less than a predetermined value, and
a movable-object position estimation unit (253) configured to estimate a position of the movable object based on the positioning information and the sensor information synchronized with each other by the information synchronizer, and
the positioning information obtaining unit is included in the on-board device and/or in the mobile terminal.

2. The information collaboration system according to claim 1, wherein
the positioning information obtaining unit is included in the on-board device and in the mobile terminal,
the mobile terminal includes a determination unit (251) configured to determine, based on a predetermined condition, accuracy of a position indicated by the positioning information obtained by the positioning information obtaining unit in the on-board device and a position indicated by the positioning information obtained by the positioning information obtaining unit in the mobile terminal, and
the determination unit selectively uses positioning information with higher position accuracy from the positioning information obtained by the positioning information obtaining unit in the on-board device and the positioning information obtained by the positioning information obtaining unit in the mobile terminal.

3. The information collaboration system according to claim 2, wherein
the positioning information obtaining unit in the on-board device is a positioning sensor, and
the determination unit determines that the positioning information obtained by the positioning information obtaining unit in the on-board device has lower position accuracy than the positioning information obtained by the positioning information obtaining unit in the mobile terminal under the predetermined condition that the positioning information obtained by the positioning information obtaining unit in the on-board device is detected based on satellite positioning data from three or fewer satellites.

4. The information collaboration system according to any one of claims 1 to 3, wherein
the mobile terminal includes a movement information obtaining unit (254) configured to obtain movement information associating the position of the movable object with the sensor information, and the mobile terminal is connected to a server (3) to transmit the movement information through the terminal communication unit, and
the server includes
a server communication unit (31) configured to communicate with the terminal communication unit, and
a server storage (33) configured to store the movement information from the server communication unit.
